# EUROPEAN PATENT APPLICATION

(11) **EP 3 656 804 A1**
(43) Date of publication of application: **27.05.2020**
(21) Application number: 20152481.6
(22) Date of filing: 28.06.2016
(51) Int. Cl.: C08J 3/02, C08G 77/04, C08L 83/04, C09K 3/18, E04C 2/288, E04C 2/52, E04C 2/04, E04B 1/64, C04B 26/30, C04B 14/36, C04B 28/14, B01F 17/00, C04B 111/27, C04B 111/34

(54) **WATERPROOF SILICONE EMULSION, WATERPROOF BOARD EXHIBITING EXCELLENT CRACK RESISTANCE**

(30) Priority: 29.06.2015 KR 20150092370; 29.06.2015 KR 20150092369
(62) Divisional of application: 16818188.1
(71) Applicant: KCC Corporation, Seoul 06608 (KR)
(72) Inventor: KANG, Kyoung Hoon, 16294 Suwon-si (KR); PARK, Soo Hwan, 16697 Suwon-si (KR); KO, Tae Ho, 17003 Yongin-si (KR); PARK, Jong Hyun, 08330 SEOUL (KR); HUR, Kyong Bok, 16891 Yongin-si (KR)
(74) Representative: Cabinet Laurent & Charras

(57) **Abstract**

The present invention relates to a waterproof silicone emulsion, a waterproof board exhibiting excellent crack resistance, and a manufacturing method therefor and, more specifically, to: a waterproof silicone emulsion comprising a silicone oil and an emulsifier; a waterproof board comprising a cured product of an aqueous gypsum slurry, which comprises calcium sulfate hemihydrate, a silicone oil and a specific catalyst, and exhibiting excellent crack resistance and a low total absorptance; and a manufacturing method therefor.

## Description

### [Technical Field]

The present invention relates to a waterproof silicone emulsion, a waterproof board exhibiting excellent crack resistance and a manufacturing method therefor, and more particularly, to a waterproof silicone emulsion comprising a silicone oil and an emulsifier, and a waterproof board which comprises a cured product of an aqueous gypsum slurry, and a manufacturing method therefor. The aqueous gypsum slurry comprises calcium sulfate hemihydrate, a silicone oil and a specific catalyst and exhibits excellent crack resistance and a low total absorption rate.

### [Background Art]

A gypsum board, which is a non-flammable, excellent sound-insulating and lightweight material, has been widely used as building interiors because of a low price. A typical raw material for a construction gypsum board is calcium sulfate hemihydrate, which is manufactured by burning natural calcium sulfate dihydrate or desulfurized calcium sulfate dihydrate to remove some of water of crystallization. Heat is generated when the calcium sulfate hemihydrate reacts with water, and it is converted to calcium sulfate dihydrate having a crystalline structure. In this process, an acicular crystalline structure is well developed which increases hardness of the gypsum board, and tightly engages with fiber of a covering paper of the gypsum board, resulting in the gypsum board wrapped with the covering paper.

Various additives are added to improve productivity and to manufacture a gypsum board with various functionalities. For example, a foaming agent is an essential additive capable of making a gypsum board lightweight by forming pores in the gypsum board. As a foaming agent, generally, a surfactant forming pores in a gypsum board is used. The gypsum board is vulnerable to moisture, but can be used on walls of a shower room when a waterproofing function is given. In addition, as a waterproofing agent, generally, silicone, asphalt, or paraffin wax is used, where asphalt has a low price but has only one color, black. Paraffin wax is added to a process of manufacturing a gypsum board after rendering it water-soluble using an emulsifier. However, paraffin wax exhibits a waterproofing effect by covering a gypsum surface and therefore a large amount of paraffin is needed. In addition, a transient waterproofing function is exhibited only when being applied to gypsum.

Paraffin wax dispersed in an aqueous solution is added and dispersed into a slurry in a process of manufacturing a gypsum slurry. The dispersed paraffin wax is transferred to the gypsum surface as a calcium sulfate hemihydrate slurry grows to calcium sulfate dihydrate crystals. As the paraffin wax is uniformly dispersed on the gypsum surface, the waterproofing effect is increased. However, since the paraffin wax does not make a strong bond with the gypsum surface and as process water in the center of the board moves to the surface in a process of drying a gypsum board, the paraffin wax also moves to the surface or is agglomerated, and thus is difficult to uniformly spread on the gypsum surface. Therefore, to give an effective waterproofing function, a relatively large amount of paraffin wax is needed, and when there is a thermal change in the gypsum board afterward, paraffin wax may move to be cornered or eluted due to an organic material, and thus is difficult to expect a stable waterproofing property.

When a silicone compound is used as a waterproofing agent, a hydrogen functional group of a silicone oil is hydrolyzed in the process of manufacturing a gypsum slurry and converted to a hydroxide functional group. The functional group reacts with a hydroxide functional group of water of crystallization in a calcium sulfate dihydrate and is hydrolyzed, and therefore the silicone oil is fixed to a solid form of the calcium sulfate dihydrate. Through this process, the silicone oil makes a strong chemical bond with the calcium sulfate dihydrate to cover the gypsum surface, and a methyl group exhibiting a waterproofing property is perpendicular to the gypsum surface, and thus the gypsum surface exhibits an effective waterproofing function. However, the silicone oil has high defoamability, and therefore bubbles generated in a gypsum core need to be removed using a foaming agent.

There has been the patent disclosing a chemical stabilization method for increasing stability of foams by adding organic/inorganic stabilizers to a surfactant (e.g., US Unexamined Patent Application Publication No. 2006/0162839 A1), and the method is suitable for avoiding a defoaming action of the forms caused by a solid gypsum particle or inhibiting defoamability by hydrocarbons of paraffin waxes, but is difficult to be applied when a silicone-based waterproofing agent is used because of high defoamability. Recently, physical solutions comprising improved equipment (e.g., EP 1 637 302 A1) have been disclosed, but all problems cannot be resolved.

### [Disclosure]

### [Technical Problem]

The present invention is to provide a silicone emulsion which can provide excellent waterproofing performance even with a small amount of a silicone oil and thus can greatly reduce a cost of raw material, a waterproof board exhibiting excellent crack resistance and a low total absorption rate, and a manufacturing method therefor.

### [Technical Solution]

A waterproof board of the present invention comprises a cured product of an aqueous gypsum slurry comprising calcium sulfate hemihydrate, a silicone oil and carbonate rock mineral as a catalyst.

A method for manufacturing a waterproof board of the present invention comprises forming an aqueous gypsum slurry comprising calcium sulfate hemihydrate, a silicone oil and carbonate rock mineral as a catalyst, and curing the aqueous gypsum slurry.

A waterproof silicone emulsion of the present invention comprises a silicone oil and an emulsifier.

According to one aspect of the present invention, a waterproof board comprises a cured product of an aqueous gypsum slurry comprising calcium sulfate hemihydrate, a silicone oil, an emulsifier and a catalyst.

According to another aspect of the present invention, a method for manufacturing a waterproof board comprises forming an aqueous gypsum slurry comprising calcium sulfate hemihydrate, a silicone oil, an emulsifier and a catalyst, and curing the aqueous gypsum slurry.

### [Advantageous Effects]

According to the present invention, a waterproof board which exhibits excellent crack resistance and a low total absorption rate can be obtained even using a small amount of silicone oil compared to paraffin wax. In addition, when the silicone emulsion according to the present invention is used, defoamability of a silicone oil is inhibited to maintain a final product having a low density and an equal level of bubble sizes as to when paraffin wax is used, a low total absorption rate (e.g., 6% or less) can be exhibited even with a small amount of a silicone oil, and the cost of raw materials can be greatly reduced.

### [Description of Drawings]

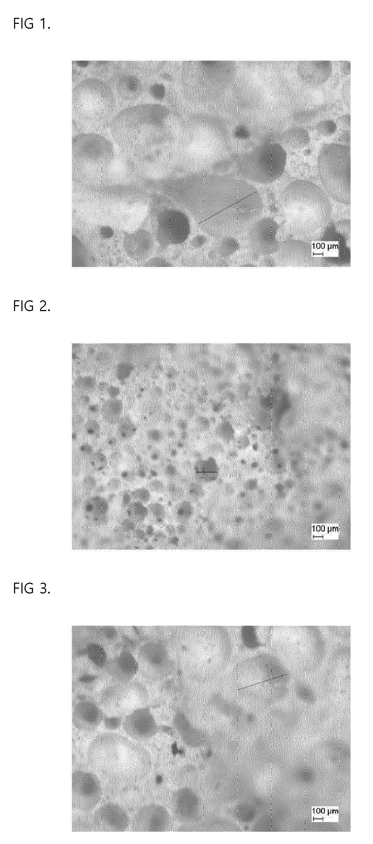

FIG. 1 is an optical microscopic image of the cross-section of a gypsum board manufactured using methylhydrogenpolysiloxane (MHP) which is a silicone oil serving as a waterproofing agent and a styrene-maleic acid (SMA) copolymer as an emulsifier according to the present invention.
FIG. 2 is an optical microscopic image of the cross-section of a gypsum board manufactured using methylhydrogenpolysiloxane (MHP) as a waterproofing agent, but not using an emulsifier.
FIG. 3 is an optical microscopic image of the cross-section of a gypsum board manufactured using paraffin wax as a waterproofing agent, but not using an emulsifier.

### [Modes of the Invention]

Hereinafter, the present invention will be described in detail.

In one aspect of the present invention, a waterproof board according to the present invention comprises a cured product of an aqueous gypsum slurry comprising calcium sulfate hemihydrate, a silicone oil, and light burned dolomite as a catalyst. The cured product of the gypsum slurry may be used as a core of the board.

The calcium sulfate hemihydrate is obtained by partially removing water of crystallization by burning natural calcium sulfate dihydrate or desulfurized calcium sulfate dihydrate.

In the waterproof board of the present invention, a content of the calcium sulfate hemihydrate in the gypsum slurry may be, for example, 40 to 80 wt%, and more specifically, 50 to 70 wt% based on 100 wt% of the slurry. In addition, a water content in the gypsum slurry of the present invention may be, for example, 20 to 60 wt%, and more specifically, 30 to 50 wt% based on 100 wt% of the slurry.

The silicone oil used to provide a waterproofing function may comprise a linear or cyclic, at least partially hydrotreated polysiloxane. Such a polysiloxane may form a highly-crosslinked siloxane polymer when polymerized in a basic environment, and the polymer has a high waterproofing property. More specifically, the polysiloxane may comprise a structure represented by the following formula.

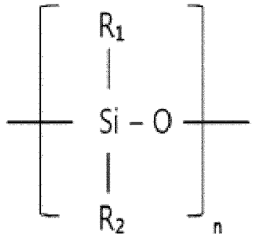

In the formula, R₁ is independently hydrogen or a non-hydrogen substituent (e.g., an unsubstituted or halogen-substituted alkyl, cycloalkyl, aryl or heteroaryl), and at least one, more specifically, 10% or more (e.g., 10 to 100%) of the plurality of R₁ is hydrogen; R₂ is a non-hydrogen substituent as described above; and n is an integer of 1 to 200.

Here, for example, the alkyl may have 1 to 4 carbon atoms, the cycloalkyl may have 5 to 10 carbon atoms, and the aryl may have 6 to 12 carbon atoms. The heteroaryl may have a total number of cyclic atoms of 5 to 12, and may have one or more heteroatoms selected from N, O and S. The halogen may be fluorine, chlorine, bromine or iodine.

Further more specifically, the polysiloxane may comprise a structure represented by the following formula.

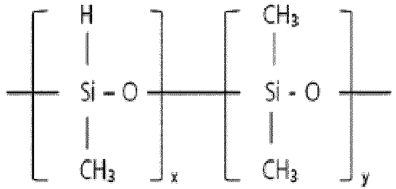

In this formula, x and y are molar fractions of structural units indicated thereby, respectively, and x + y = 1 where x is 0.1 to 1 and y is 0 to 0.9.

According to an exemplary embodiment of the present invention, as the silicone oil, a silicone oil comprising methylhydrogenpolysiloxane (MHP) is used.

In the waterproof board of the present invention, a content of the silicone oil in the gypsum slurry may be, for example, 0.04 to 4 parts by weight, and more specifically, 0.1 to 1.5 parts by weight based on 100 parts by weight of the calcium sulfate hemihydrate. When the content of the silicone oil in the gypsum slurry is excessively smaller than the above--mentioned range, a desired waterproofing property may not be exhibited, on the other hand, when the content of the silicone oil in the gypsum slurry is excessively larger than the above--mentioned range, due to specific defoamability of the silicone oil, a larger amount of the gypsum is used, viscosity of the slurry is increased, and therefore the gypsum is hardened in a mixer.

In the present invention, the silicone oil may be added in the process of manufacturing a board as it is, and alternatively, may be emulsified in water using a surfactant and/or a high-shear rotating reactor or high-pressure homogenizer, and then added in the process of manufacturing a board in the form of an emulsion or aqueous dispersion.

The silicone oil applied to a gypsum board as a waterproofing agent is generally hydrolyzed under a basic catalyst (a catalyst exhibiting basicity in an aqueous solution) in the form of an oxide or hydroxide of an alkali metal or alkali earth metal, thereby converting a linear polysiloxane to a branched polysiloxane, and therefore waterproofing performance is exhibited.

However, when a basic catalyst is used, a pH is increased and thus the hydration of calcium sulfate hemihydrate may be retarded, and the silicone oil breaks bubbles generated in the slurry of the gypsum board due to a low surface tension and a hydrogen gas generated as a byproduct in hydrolysis, and thus there may be a difficulty in formation of a lightweight gypsum board or a crack may be caused in a core of the gypsum board.

Therefore, in the present invention, such problems have been solved by specifically using a catalyst of a carbonate rock mineral ingredient without a conventional cement, CaO, dead burned/calcined dolomite, or Ca(OH)₂, NaOH when the waterproof board is manufactured.

The carbonate rock mineral of the present invention as a catalyst may be, but is not limited to, aragonite, calcite, or dolomite, and preferably light burned dolomite.

The light burned dolomite has a higher catalyst activity than a conventional catalyst, for example, a dead burned (calcined at 1,700 to 1,800 °C) or medium burned (calcined at 1,000 to 1,500 °C) dolomite, prevents cracks generated in the gypsum board due to production of hydrogen from the silicone oil by inhibiting a sudden catalyst activity, and does not retard a time for hydration of the calcium sulfate hemihydrate. In addition, the light burned dolomite does not make a side reaction with additives added to produce a gypsum board, and therefore is easily applied to a process of producing gypsum. Particularly, a poly-naphthalene sulfonate (PNS)-based superplasticizer is used to reduce the amount of water used in gypsum molding, when it is used with a siloxane, it increases the density of gypsum, and allows the gypsum to have a smaller pore size. When a siloxane content is reduced by using the light burned dolomite because of this reason, defoamation caused by a siloxane may be minimized.

The light burned dolomite is prepared by calcinating a dolomite at a temperature, for example, 700 to 1,000 °C, and a composition thereof is as follows.

| Silicone emulsion | Type of emulsifier | Amount of emulsifier (g) | MHP amount (g) | Water amount (g) |
|---|---|---|---|---|
| Emulsion 1 | - | - | 200 | 300 |
| Emulsion 2 | SMA (3:1) | 6 | 200 | 294 |
| Emulsion 3 | SMA (3:1) | 2 | 200 | 298 |
| Emulsion 4 | SMA (3:1) | 18 | 200 | 282 |
| Emulsion 5 | SMA (1:1) | 6 | 200 | 294 |
| Emulsion 6 | SMA (2: 1) | 6 | 200 | 294 |
| Emulsion 7 | SMA (4:1) | 6 | 200 | 294 |
| Emulsion 8 | Styrene-acrylic acid copolymer (1:1) | 6 | 200 | 294 |
| Emulsion 9 | Styrene-methacrylic acid copolymer (1:1) | 6 | 200 | 294 |
| Emulsion 10 | SMA (1:1) SMA (3:1) | 3 g each | 200 | 294 |

In the waterproof board of the present invention, a content of the carbonate rock mineral catalyst in the gypsum slurry may be, for example, 0.2 to 1.5 parts by weight, and more specifically, 0.3 to 1.0 part by weight with respect to 100 parts by weight of the calcium sulfate hemihydrate. When the catalyst content in the gypsum slurry is excessively less than the above-mentioned range, the silicone oil may not be polymerized, and thus a sufficient waterproofing property may not be exhibited. On the other hand, when the catalyst content in the gypsum slurry is excessively greater than the above-mentioned range, a pH of the entire slurry is increased and therefore hardness may be lowered.

While not particularly limited, the carbonate rock mineral catalyst used herein may have an average particle size of 50 to 4,000 µm, and preferably 500 to 2,500 µm. When the average particle size of the mineral catalyst is excessively small, it is difficult to be transferred or be exactly measured, and when the average particle size of the mineral catalyst is greater than 4,000 µm, the mineral catalyst is excessively larger than the calcium sulfate hemihydrate of the raw material and therefore is not uniformly dispersed in a gypsum product, resulting in nonuniformity of the product.

In addition, within the range suitable for achieving the object of the present invention, the gypsum slurry may further comprise a basic catalyst in addition to the carbonate rock mineral catalyst. As a basic catalyst which can be additionally used, limestone, slaked lime, cement, MgO, CaO, or CaMgO may be used alone or in combination.

The gypsum slurry may further comprise a surfactant. As the surfactant, for example, an anionic surfactant (e.g., anionic surfactant comprising a sulfate group), a non-ionic surfactant, an amphoteric surfactant (e.g., betaine), an alkyl polyglucoside, or an alkyl alcohol (e.g., a C8 to C20 alkyl alcohol) may be used alone or in combination, but the present invention is not limited thereto. A poly-naphthalene sulfonate (PNS)-based superplasticizer may also be used as a surfactant.

When the surfactant is comprised in the gypsum slurry, its content may be, for example, 2 to 60 parts by weight, and more specifically, 5 to 40 parts by weight with respect to 100 parts by weight of the silicone oil. When the content of the surfactant is excessively less, the surfactant may not work effectively, and on the other hand, when the content thereof is excessively large, the gypsum slurry may be increased in viscosity, decreased in mobility, and therefore there may be difficulty in mixing in a mixer.

In another aspect of the present invention, a method for manufacturing a waterproof board, which comprises forming an aqueous gypsum slurry comprising calcium sulfate hemihydrate, a silicone oil, and a carbonate rock mineral as a catalyst, and curing the gypsum slurry, is provided.

While not limited, according to an exemplary embodiment of the present invention, a waterproof board of the present invention may be manufactured by a method comprising forming aqueous gypsum slurries comprising a silicone oil or an aqueous emulsion or aqueous dispersion of the silicone oil, the carbonate rock mineral catalyst and the calcium sulfate hemihydrate are used to form the aqueous gypsum slurry, and the aqueous gypsum slurry is molded and cured.

Generally, to manufacture a porous, lightweight gypsum board, a pre-foam is manufactured by injecting a high-pressure air into an aqueous solution comprising an anionic surfactant, and molded while being mixed with a calcium sulfate hemihydrate and weighed process water. A lightweight gypsum board needs a proper combination of large pores and small pores, which is because, in the manufacture of the gypsum board, large pores are usually placed in the center of the gypsum board, and small pores are usually placed on upper and lower surfaces of the gypsum board, and therefore the gypsum board has advantages in terms of the adhesive property of a back paper, hardness and dry conditions. For this reason, it is important to maintain suitably large bubbles.

The silicone oil, compared to paraffin wax, exhibits very excellent waterproofing performance even with a small amount. However, as the silicone oil serves as a defoaming agent, it breaks bubbles in the gypsum slurry and increases a gypsum density. When an excessive amount of a weight-reducing agent is added to compensate the reduction in bubbles caused by silicone, the size of the bubbles is reduced, and the viscosity of the slurry is increased, and therefore it is difficult to mold a gypsum board. In addition, when a conventional basic catalyst is used, due to an excessively fast reaction rate, a hydrogen molecule, which is a reaction byproduct, is abruptly generated, resulting in cracking in a gypsum product.

In the present invention, excellent waterproofing performance is obtained by using even a smaller amount of the silicone oil as a waterproofing agent compared to paraffin wax, and a suitable reaction rate may be exhibited by using a carbonate rock mineral as a catalyst, resulting in the prevention of cracking in the gypsum board.

In one exemplary embodiment, the waterproof board of the present invention may be manufactured using a waterproof silicone emulsion.

The waterproof silicone emulsion of the present invention comprises a silicone oil and an emulsifier.

The silicone oil is used to provide a waterproofing function, and may comprise a linear or cyclic, at least partially hydrotreated polysiloxane. Such a polysiloxane may form a highly-crosslinked siloxane polymer when polymerized in a basic environment, and the polymer has a high waterproofing property. More specifically, the polysiloxane may comprise a structure represented by the following formula.

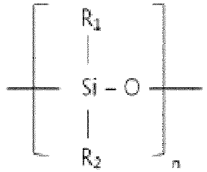

In the specification, R₁ is independently hydrogen or a non-hydrogen substituent (e.g., an unsubstituted or halogen-substituted alkyl, cycloalkyl, aryl or heteroaryl), and at least one, more specifically, 10% or more (e.g., 10 to 100%) of the plurality of R₁ is hydrogen; R₂ is a non-hydrogen substituent as described above; and n is an integer of 1 to 200.

Here, for example, the alkyl may have 1 to 4 carbon atoms, the cycloalkyl may have 5 to 10 carbon atoms, and the aryl may have 6 to 12 carbon atoms. The heteroaryl may have a total number of cyclic atoms of 5 to 12, and may have one or more heteroatoms selected from N, O and S. The halogen may be fluorine, chlorine, bromine or iodine.

Further more specifically, the polysiloxane may comprise a structure represented by the following formula.

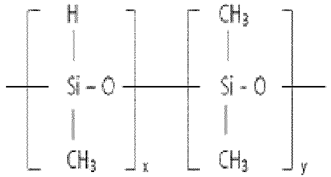

In this formula, x and y are molar fractions of structural units indicated thereby, respectively, and x + y = 1 where x is 0.1 to 1 and y is 0 to 0.9.

According to an exemplary embodiment of the present invention, as the silicone oil, a silicone oil comprising methylhydrogenpolysiloxane (MHP) is used at 0.1 to 60 parts by weight with respect to 100 parts by weight of the silicone emulsion.

The emulsifier is used to increase the dispersity of an aqueous solution of silicone oil to inhibit defoamability thereof, and as the emulsifier, a copolymer of a lipophilic monomer and a hydrophilic monomer may be used. For example, the lipophilic monomer may be an aromatic or aryl benzene having 1 to 3 benzene rings or aryl naphthalene, and typically, benzene, toluene or naphthalene, and more preferably, styrene may be used. The hydrophilic monomer may be selected from the group consisting of a polymerizable monomer (e.g., an alcohol, glycol, etc.) comprising one or more hydroxyl groups (-OH), a halogenated styrene (halo-styrene), maleic acid or an anhydride thereof, an acrylic monomer or a derivative thereof and a methacrylic monomer or a derivative thereof. In addition, a salt form (e.g., a Na salt, a K salt, an ammonium salt, etc.), a hydrolyzed form, a sulfonated form, and a partially or totally esterified form of the copolymer of the lipophilic monomer and the hydrophilic monomer may also be used as the emulsifier.

More specifically, the copolymer of the lipophilic monomer and the hydrophilic monomer may be one or more selected from the group consisting of a copolymer of styrene and allyl alcohol, a copolymer of styrene and ethylene glycol, a copolymer of styrene and chlorostyrene, a copolymer of styrene and acrylonitrile, a copolymer of styrene and maleic acid or an anhydride thereof (SMA copolymer), a copolymer of cumene-finished styrene and maleic acid or an anhydride thereof, a hydrolyzed form of the SMA copolymer, a sulfonated form of the SMA copolymer, an esterified form of the SMA copolymer, a copolymer of styrene and acrylic acid, a copolymer of styrene and methacrylic acid, and a salt form thereof. Commercially available SMA copolymer products may comprise SMA1000, SMA2000, SMA3000, SMA4000, and SMA17352, which are manufactured by Cray Valley Ltd.

In the copolymer of the lipophilic monomer and the hydrophilic monomer, a molar ratio of the lipophilic monomer to the hydrophilic monomer may be, for example, 1:1 to 8:1, and more specifically, 1:1 to 4:1. In addition, to render the copolymer of the lipophilic monomer and the hydrophilic monomer in an aqueous solution, the copolymer may be formed in a salt form using a basic solution such as NaOH, KOH, or ammonia water to be dissolved. Here, when the aqueous solution has an excessively high pH, it can affect the reactivity of hydrogen atoms in the silicone oil, and therefore the aqueous solution of copolymer is preferably maintained within a pH of 9 to 12.

Since the copolymer of the lipophilic monomer and the hydrophilic monomer is physically linked with a silicone oil polymer, thereby forming a micelle, the lipophilic silicone oil may be uniformly dispersed in water. As the result, the silicone oil is easily dispersed on the surface of a waterproof product (e.g., gypsum) in polymerization, and thus exhibits high waterproofing performance even with a small amount of silicone. In addition, it is possible to produce lightweight waterproofing products by suitably forming large-sized bubbles in the products by inhibiting defoamability of the silicone oil.

A content of the emulsifier in the silicone emulsion of the present invention may be, for example, 0.002 to 10 parts by weight, and more specifically, 0.3 to 5 parts by weight with respect to 100 parts by weight of the silicone oil. When the content of the emulsifier in the silicone emulsion is excessively less than the above-mentioned range, the micelles formed as described above cannot reach a critical micelle concentration (CMC) and therefore an emulsion may not be prepared. On the other hand, when the content of the emulsifier in the silicone emulsion is excessively large, the defoamability of the silicone oil may not be improved, and therefore degeneration of the silicone oil may be accelerated.

The silicone emulsion of the present invention may further comprise a foaming agent to improve density of a product to which the foaming agent is applied and bubbles. As the foaming agent, a foaming surfactant may be used, and more specifically, an anionic surfactant (e.g., sulfate group-containing anionic surfactant), an amphoteric surfactant (e.g., betaine), an alkyl polyglucoside, or an alkyl alcohol (e.g., a C8 to C20 alkyl alcohol) may be used alone or in combination, but the present invention is not limited thereto.

When the foaming agent is comprised in the silicone emulsion of the present invention, its content may be, for example, 2 to 60 parts by weight, and more specifically, 5 to 40 parts by weight with respect to 100 parts by weight of the silicone oil. When the content of the foaming agent in the silicone emulsion is excessively less than the above-mentioned range, due to the defoamability of the silicone oil, bubbles may disappear and therefore the density may be increased. On the other hand, when the content of the foaming agent in the silicone emulsion is excessively greater than the above-mentioned range, a slurry viscosity of the product to which the silicone emulsion is applied is increased, and therefore the slurry is decreased in mobility and there is difficulty in mixing in a mixer.

The silicone emulsion of the present invention may provide excellent waterproofing performance even with a small amount of the silicone oil, and contribute to implementation of lightweight silicone emulsion-applied products, and thus can be applied to various waterproof products such as a waterproof board, but the present invention is not limited thereto.

Accordingly, in still another aspect of the present invention, a waterproof board comprises a cured product of an aqueous gypsum slurry comprising calcium sulfate hemihydrate, a silicone oil, an emulsifier and a catalyst. The cured product of the gypsum slurry may be used as a core of the board.

The calcium sulfate hemihydrate is obtained by partially removing water of crystallization by burning natural calcium sulfate dihydrate or desulfurized calcium sulfate dihydrate.

In the waterproof board of the present invention, a content of the calcium sulfate hemihydrate in the gypsum slurry may be, for example, 40 to 80 wt%, and more specifically, 50 to 70 wt% with respect to 100 wt% of the slurry. In addition, a water content in the gypsum slurry of the present invention may be, for example, 20 to 60 wt%, and more specifically, 30 to 50 wt% with respect to 100 wt% of the slurry.

As described above, the silicone emulsion comprised in the waterproof board of the present invention comprises a silicone oil and an emulsifier. In addition, the gypsum slurry may further comprise a foaming agent, as described above.

In the waterproof board of the present invention, a content of the silicone emulsion in the gypsum slurry may be 0.0002 to 4 parts by weight, and more specifically, 0.001 to 1.5 parts by weight with respect to 100 parts by weight of the calcium sulfate hemihydrate. When the content of the silicone emulsion in the gypsum slurry is excessively less than the above-mentioned range, a desired waterproofing property may not be exhibited. On the other hand, when content of the silicone emulsion in the gypsum slurry is excessively greater than the above-mentioned range, despite the silicone emulsion, due to the defoamability, which is a specific characteristic of the silicone oil, an amount of the gypsum is increased, the viscosity of a slurry is increased, and therefore the resulting product is hardened in a mixer.

The catalyst may react with active hydrogen present in the silicone oil, and serves to form a siloxane polymer on a product surface. Here, a basic catalyst may be used. For example, as the catalyst, limestone, slaked lime, cement, MgO, CaO, CaMgO, or dolomite may be used alone or in combination, and more specifically, light burned MgO, light burned CaMgO, or light burned dolomite may be used alone or in combination, but the present invention is not limited thereto.

In the waterproof board of the present invention, a content of the catalyst in the gypsum slurry may be 0.2 to 1.5 parts by weight, and more specifically, 0.3 to 1.0 part by weight with respect to 100 parts by weight of the calcium sulfate hemihydrate. When the catalyst content in the gypsum slurry is excessively less than the above-mentioned range, the silicone oil may not be polymerized, and thus a sufficient waterproofing property may not be exhibited. On the other hand, when the catalyst content in the gypsum slurry is excessively greater than the above-mentioned range, a pH of the entire slurry is increased and therefore hardness may be lowered.

In a yet another aspect of the present invention, a method for manufacturing a waterproof board, which comprises forming an aqueous gypsum slurry comprising calcium sulfate hemihydrate, a silicone oil, an emulsifier and a catalyst, and curing the gypsum slurry, is provided.

According to an exemplary embodiment of the present invention, the waterproof board of the present invention may be manufactured by a method which comprises forming an aqueous gypsum slurry by forming an aqueous emulsion by mixing a silicone oil and an emulsifier and mixing the aqueous emulsion with a mixture of a catalyst and a calcium sulfate hemihydrate, and plasticizing and curing the gypsum slurry, but the present invention is not limited thereto.

Generally, to manufacture a porous, lightweight gypsum board, a pre-foam is manufactured by injecting a high-pressure air into an aqueous solution comprising an anionic surfactant, and molded while being mixed with a calcium sulfate hemihydrate and weighed process water. A lightweight gypsum board needs a proper combination of large pores and small pores, which is because, in the manufacture of the gypsum board, large pores are usually placed in the center of the gypsum board, and small pores are usually placed on upper and lower surfaces of the gypsum board, and therefore the gypsum board has advantages in terms of the adhesive property of a back paper, hardness and dry conditions. For this reason, it is important to maintain suitably large bubbles.

The silicone oil, compared to paraffin wax, exhibited much excellent waterproofing performance even with a small amount. However, as the silicone oil serves as a defoaming agent, it breaks bubbles in the gypsum slurry and increases a gypsum density. When an excessive amount of a foaming agent is added to compensate the reduction in bubbles caused by silicone, the size of the bubbles is reduced, and the viscosity of the slurry is increased, and therefore it is difficult to mold a gypsum board. In addition, when a basic catalyst is used, due to an excessively fast reaction rate, a hydrogen molecule, which is a reaction byproduct, is abruptly generated, resulting in cracking in a gypsum product.

In the present invention, excellent waterproofing performance is obtained by using even a smaller amount of the silicone oil as a waterproofing agent, defoamability of the silicone oil may be inhibited by combining the emulsifier for use, and a suitable reaction rate may be exhibited by even using a basic catalyst, resulting in the prevention of cracking in the gypsum board.

Hereinafter, the present invention will be described in further detail with reference to examples and comparative examples. However, the following examples are merely provided to exemplify the present invention, and the scope of the present invention is not limited thereto.

### [Examples]

### I. Manufacture of gypsum board

### Example 1

A gypsum slurry was prepared by mixing 150 g of calcium sulfate hemihydrate, 0.6 g of methylhydrogenpolysiloxane (MHP), 0.6 g of a catalyst listed in Table 1 below (in Comparative Example 1-2, a catalyst was not used), and 97.5 g of distilled water. Here, with respect to 100 parts by weight of the calcium sulfate hemihydrate, 0.5 parts by weight of PNS as a superplasticizer and 0.01 parts by weight of a retarding agent (Retarder L) were also contained in the gypsum slurry. The prepared slurry was cured, thereby preparing a gypsum specimen. In Comparative Example 1-1, a gypsum specimen was prepared using 3.5 parts by weight of paraffin wax, instead of MHP, as a waterproofing agent with respect to 100 parts by weight of the calcium sulfate hemihydrate without a catalyst.

Following drying of the prepared specimen according to KS F 3504 specifications, a total absorption rate (an increment in the weight of specimen after testing with respect to 100% of the original weight of specimen) of the prepared specimen was measured, and the presence or absence of cracks in the gypsum was confirmed, and are shown in Table 1.

**[Table 1]**

| Example No. | Type of catalyst | Average particle size of catalyst (µm) | Total absorption rate (%) | Cracking |
|---|---|---|---|---|
| Comparative Example 1-1 | - | - | 7.2 | No |
| Comparative Example 1-2 | - | - | 23.8 | No |
| Comparative Example 1-3 | Portland cement | 200 | 13.8 | No |
| Comparative Example 1-4 | Dead burned dolomite | 630 | 17.2 | No |
| Comparative Example 1-5 | CaO | 1,100 | 3.2 | Yes |
| Comparative Example 1-6 | Ca(OH)₂ | 850 | 4.1 | Yes |
| Comparative Example 1-7 | NaOH | 600 | 3.1 | Yes |
| Example 1 | Lightly burned dolomite | 600 | 4.3 | No |

From the result of Table 1, it was confirmed that, when light burned dolomite was used as a catalyst, compared to when a catalyst is not used or a different catalyst is used, an excellent total absorption rate (that is, excellent catalytic activity and waterproofing performance thereby) was provided and there were no cracks.

### Example 2

A gypsum specimen of Example 2-1 was prepared by the same method as described in Example 1, except that 0.5 part by weight of each of MHP and a light burned dolomite catalyst were used with respect to 100 parts by weight of calcium sulfate hemihydrate.

Meanwhile, a gypsum specimen of Example 2-2 was prepared using an emulsion containing 40 wt% of MHP which was prepared by passing a mixture of 300 g of distilled water and 200 g of MHP through a high-pressure homogenizer under 450 bar, instead of a direct use of MHP. Here, 0.5 part by weight of each of the MHP and the light burned dolomite catalyst was used with respect to 100 parts by weight of calcium sulfate hemihydrate, as described in Example 2-1.

In Comparative Example 2, a gypsum specimen was prepared using 3.5 parts by weight of paraffin wax as a waterproofing agent, instead of MHP, with respect to 100 parts by weight of the calcium sulfate hemihydrate without a catalyst.

Following drying of the prepared specimen by the same method as described in Example 1, a total absorption rate was measured, and the presence or absence of cracks in the gypsum was confirmed, and are shown in Table 2.

**[Table 2]**

| Example No. | Type of MHP injection | Total absorption rate (%) | Cracking |
|---|---|---|---|
| Comparative Example 2 | - | 6.5 | No |
| Example 2-1 | Direct injection | 3.5 | No |
| Example 2-2 | Emulsion | 3.8 | No |

From the result of Table 2, it was confirmed that, in both cases of direct addition of MHP and emulsification of MHP before being added, compared to paraffin wax, an excellent total absorption rate was provided, and there were no cracks.

### Example 3

A gypsum specimen was prepared using an emulsion containing 40 wt% of MHP prepared by the method as described in Example 2-2, except that a surfactant listed in Table 3 below was used at 3 parts by weight with respect to 100 parts by weight of MHP in the preparation of the emulsion. Following drying of the prepared specimen by the same method as described in Example 1, a total absorption rate was measured and is shown in Table 3.

**[Table 3]**

| Example No. | Type of surfactant | Total absorption rate (%) |
|---|---|---|
| Example 3-1 | (C12-C20)alkyl sulfate | 4.3 |
| Example 3-2 | 1-dodecanol | 3.9 |

### II. Preparation of waterproof silicone emulsion and gypsum board

To prepare a gypsum specimen, first, a silicone emulsion was prepared. The silicone emulsion was prepared by passing water, methylhydrogenpolysiloxane (MHP) and an emulsifier through a high-pressure homogenizer under 450 bar. When an emulsifier was used, to determine characteristics of the silicone emulsion, the emulsion was prepared while adjusting a composition as shown in Table 4. SMAs used in Emulsions 2 to 7 were copolymers of styrene and maleic acid, which were copolymers prepared by copolymerizing 1 to 4 mol of styrene with respect to 1 mol of maleic acid. Copolymers of styrene acrylic acid and methacrylic acid used in Emulsions 8 and 9 were copolymers prepared by copolymerizing styrene and a hydrophilic group at a molar ratio of 1:1.

**[Table 4]**

| Silicone emulsion | Type of emulsifier | Amount of emulsifier (g) | MHP amount (g) | Water amount (g) |
|---|---|---|---|---|
| Emulsion 1 | - | - | 200 | 300 |
| Emulsion 2 | SMA (3:1) | 6 | 200 | 294 |
| Emulsion 3 | SMA (3:1) | 2 | 200 | 298 |
| Emulsion 4 | SMA (3:1) | 18 | 200 | 282 |
| Emulsion 5 | SMA (1:1) | 6 | 200 | 294 |
| Emulsion 6 | SMA (2:1) | 6 | 200 | 294 |
| Emulsion 7 | SMA (4:1) | 6 | 200 | 294 |
| Emulsion 8 | Styrene-acrylic acid copolymer (1:1) | 6 | 200 | 294 |
| Emulsion 9 | Styrene-methacrylic acid copolymer (1:1) | 6 | 200 | 294 |
| Emulsion 10 | SMA (1:1) SMA (3:1) | 3 g each | 200 | 294 |

### Example 4

A gypsum specimen was prepared using the above-prepared emulsion to observe a density. The gypsum specimen was prepared by preparing a gypsum slurry by adding 0.5 part by weight of a water reducing agent (poly-naphthalene sulfonate), the prepared emulsion at the content shown in Table 4, 0.6 part by weight of light burned dolomite as a catalyst, and 49 parts by weight of water to 100 parts by weight of calcium sulfate hemihydrate, and pouring a preform [prepared by mixing 0.05 part by weight of a foaming agent (GPA-01 manufactured by Stepane) and 21 parts by weight of water and foaming the resulting mixture in a high speed agitator at 2,500 rpm for 1 minute] to be mixed with the resulting mixture, and curing the gypsum slurry. Here, in Comparative Example 4-1, an MHP emulsion without an emulsifier was used to prepare a gypsum specimen by the above-described method. A density of the prepared gypsum specimen was measured, and is shown in Table 5.

**[Table 5]**

| Example No. | Silicone emulsion | Amount of silicone emulsion used (parts by weight) | Density of gypsum specimen (g/ml) |
|---|---|---|---|
| Comparative Example 4-1 | Emulsion 1 | 1.25 | 1.10 |
| Example 4-1 | Emulsion 2 | 1.25 | 0.58 |
| Example 4-2 | Emulsion 2 | 1 | 0.62 |

### Example 5

Experiments for Emulsions 3 and 4, which were prepared by adjusting the amount of the emulsifier of Emulsion 2, were carried out in the same manner as described in Example 4, and the results are shown in Table 6.

**[Table 6]**

| Example No. | Silicone emulsion | Amount of silicone emulsion used (parts by weight) | Density of gypsum specimen (g/ml) |
|---|---|---|---|
| Example 5-1 | Emulsion 3 | 1.25 | 0.61 |
| Example 5-2 | Emulsion 4 | 1.25 | 0.60 |

### Example 6

Total absorption rates for the gypsum specimens of Examples 4-1 and 4-3 were measured. The total absorption rate was obtained by preparing a gypsum specimen according to KS F 3504 specifications, immersing the gypsum specimen in water at 20 °C for 2 hours, and measuring a mass increment (%) based on the original mass (100%). As Comparative Example 6-1, a gypsum specimen prepared without an emulsifier and MHP was used, and as Comparative Example 6-2, a gypsum specimen prepared with 2.5 parts by weight of paraffin wax as a waterproofing agent, instead of MHP, with respect to 100 parts by weight of calcium sulfate hemihydrate was used. The measurement results are shown in Table 7.

**[Table 7]**

| Example No. | Silicone emulsion | Amount of silicone emulsion used (parts by weight) | Amount of catalyst used (parts by weight) | Total absorption rate (%) |
|---|---|---|---|---|
| Example 6-1 | - | - | 0 | 37.5 |
| Example 6-2 | - | -²⁾ | 0 | 5.8 |
| Example 4-1 | Emulsion 2 | 1.25 | 0.6 | 2.6 |
| Example 4-3 | Emulsion 2 | 1 | 0.6 | 5.5 |

1) Amount of catalyst used: parts by weight with respect to 100 parts by weight of calcium sulfate hemihydrate (the same as below)
2) 2.5 parts by weight of paraffin wax instead of MHP

### Example 7

Experiments for Emulsions 5 to 7, which were prepared by adjusting the ratio of hydrophilic groups and hydrophobic groups of the emulsifier in Emulsion 2, were carried out in the same manner as described in Example 4, and the results are shown in Table 8.

**[Table 8]**

| Example No. | Silicone emulsion | Amount of silicone emulsion used (parts by weight) | Density of gypsum specimen (g/ml) |
|---|---|---|---|
| Example 7-1 | Emulsion 5 | 1.25 | 0.61 |
| Example 7-2 | Emulsion 6 | 1.25 | 0.63 |
| Example 7-3 | Emulsion 7 | 1.25 | 0.61 |

### Example 8

Experiments for Emulsions 8 and 9, which were prepared by adjusting hydrophilic groups in Emulsion 2, were carried out in the same manner as described in Example 4, and the results are shown in Table 9.

**[Table 9]**

| Example No. | Silicone emulsion | Amount of silicone emulsion used (parts by weight) | Density of gypsum specimen (g/ml) |
|---|---|---|---|
| Example 8-1 | Emulsion 8 | 1.25 | 0.63 |
| Example 8-2 | Emulsion 9 | 1.25 | 0.65 |

### Example 9

An experiment for Emulsion 10, which was mixed with an emulsifier, was carried out in the same manner as described in Example 4, and the result is shown in Table 10.

**[Table 10]**

| Example No. | Silicone emulsion | Amount of silicone emulsion used (parts by weight) | Density of gypsum specimen (g/ml) |
|---|---|---|---|
| Example 9-1 | Emulsion 10 | 1.25 | 0.60 |

### Example 10

An MHP emulsion was prepared in the same manner as used for Emulsion 2 of Example 4 except that a hydrogen content of a silicone oil varied, a gypsum specimen was prepared in the same manner as used for Example 4 using the previously prepared emulsion, and a total absorption rate of the prepared gypsum specimen was measured. As Comparative Example 10-1, a gypsum specimen prepared using 3.5 parts by weight of paraffin wax as a waterproofing agent with respect to 100 parts by weight of calcium sulfate hemihydrate was used. Measurement results are shown in Table 11.
- Example 10-1: hydrogen content: methyl content in MHP = 100% : 0%
- Example 10-2: hydrogen content: methyl content in MHP = 50% : 50%
- Example 10-3: hydrogen content: methyl content in MHP = 10% : 90%

**[Table 11]**

| Example No. | Amount of silicone emulsion used (parts by weight) | Hydrogen content of R₁ | Total absorption rate (%) |
|---|---|---|---|
| Comparative Example 10-1 | 3.5 | - | 5.7 |
| Example 10-1 | 1.25 | 100% | 3.3 |
| Example 10-2 | 1.25 | 50% | 4.7 |
| Example 10-3 | 1.25 | 10% | 5.2 |

### Example 11

A gypsum specimen was prepared in the same manner as used for Example 4-1 except that a foaming agent shown in Table 12 was further used. A density of the prepared gypsum specimen was measured, and is shown in Table 12.

**[Table 12]**

| Example No. | Type and amount of foaming agent used¹⁾ | Density of gypsum specimen (g/ml) |
|---|---|---|
| Example 11-1 | (C10-C14)alkyl sulfate: 50 | 0.59 |
| Example 11-2 | (C10-C14)alkyl ethoxy sulfate (ethoxy group 3-5): 50 | 0.57 |
| Example 11-3 | Alkyl polyglucoside: 40 | 0.55 |
| Example 11-4 | 1-dodecanol: 50 | 0.63 |
| Example 11-5 | Betaine: 20 | 0.61 |

1) Amount of foaming agent used: parts by weight with respect to 100 parts by weight of silicone oil

### Example 12

An MHP emulsion was prepared in the same manner as used for Emulsion 2 except that an emulsifier varied as described below, a gypsum specimen was prepared in the same manner as used for Example 4 using the previously prepared emulsion, and a density of the prepared gypsum specimen was measured, and is shown in Table 13.
- Example 12-1: cumene-finished SMA copolymer was used
- Example 12-2: partially-esterified SMA copolymer was used
- Example 12-3: sulfonated SMA copolymer was used

**[Table 13]**

| Example No. | Amount of emulsifier used (G) | Amount of silicone emulsion used (parts by weight) | Density of gypsum specimen (g/ml) |
|---|---|---|---|
| Example 12-1 | 3 | 1.25 | 0.61 |
| Example 12-2 | 3 | 1.25 | 0.63 |
| Example 12-3 | 3 | 1.25 | 0.75 |

## Claims

1. A waterproof silicone emulsion, comprising:
a silicone oil and an emulsifier.

2. The waterproof silicone emulsion of claim 1, wherein the silicone oil comprises a linear or cyclic, at least partially hydrotreated polysiloxane.

3. The waterproof silicone emulsion of claim 2, wherein the polysiloxane has a structure represented by the following formula: 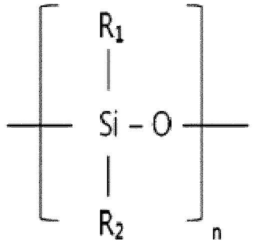 where R1 is independently hydrogen or a non-hydrogen substituent, at least one of the plurality of R1 is hydrogen; R2 is a non-hydrogen substituent as described above; and n is an integer of 1 to 200.

4. The waterproof silicone emulsion of claim 1, wherein the emulsifier is a copolymer of a lipophilic monomer and a hydrophilic monomer or a salt form thereof, a hydrolyzed form thereof, a sulfonated form thereof, or a partially or entirely esterified form thereof.

5. The waterproof silicone emulsion of claim 4, wherein the lipophilic monomer is styrene, and wherein the hydrophilic monomer is selected from the group consisting of a polymerizable monomer comprising one or more hydroxyl groups (-OH), halogenated styrene, maleic acid or an anhydride thereof, an acrylic monomer or a derivative thereof, and a methacrylic monomer or a derivative thereof.

6. The waterproof silicone emulsion of claim 1, wherein the emulsifier is one or more selected from the group consisting of a copolymer of styrene and allyl alcohol, a copolymer of styrene and ethylene glycol, a copolymer of styrene and chlorostyrene, a copolymer of styrene and acrylonitrile, a copolymer of styrene and maleic acid or an anhydride thereof, a copolymer of cumene-finished styrene and maleic acid or an anhydride thereof, a hydrolyzed form of the copolymer of styrene and maleic acid or an anhydride thereof, a sulfonated form of the copolymer of styrene and maleic acid or an anhydride thereof, an esterified form of the copolymer of styrene and maleic acid or an anhydride thereof, a copolymer of styrene and acrylic acid, a copolymer of styrene and methacrylic acid, and a salt form thereof.

7. The waterproof silicone emulsion of claim 1, further comprising a foaming agent.

8. The waterproof silicone emulsion of claim 7, wherein the foaming agent is selected from the group consisting of an anionic surfactant, an amphoteric surfactant, an alkyl polyglucoside, an alkyl alcohol and a combination thereof.

9. A waterproof board, comprising:
a cured product of an aqueous gypsum slurry comprising calcium sulfate hemihydrate;
a waterproof silicone emulsion according to any one of claim 1 to 8; and
a catalyst.

10. The waterproof board of claim 9, wherein the catalyst is a basic catalyst.

11. The waterproof board of claim 9, wherein the aqueous gypsum slurry further comprises a foaming agent.

12. The waterproof board of claim 9, wherein the catalyst comprises a light burned dolomite.

13. The waterproof board of claim 12, wherein the light burned dolomite is the dolomite which is calcined at 700 to 1,000°C.

14. The waterproof board of claim 9, wherein the particle size of the catalyst is 500 to 2,500µm.
